# EUROPEAN PATENT SPECIFICATION

(11) **EP 0 335 425 B1**
(45) Date of publication and mention of the grant of the patent: **08.01.1997**
(21) Application number: 89107199.5
(22) Date of filing: 05.02.1986
(51) Int. Cl.: G09F 3/02, B32B 27/08

(54) **Composite facestocks**
Verbundfutter
Doublures composites

(30) Priority: 05.02.1985 US 699204
(43) Date of publication of application: 04.10.1989
(62) Divisional of application: 86901268.2
(73) Proprietor: AVERY INTERNATIONAL CORPORATION, Pasadena California 91103 (US)
(72) Inventor: Freedman, Melvin S., Beachwood Ohio 44122 (US)
(74) Representative: Geissler, Bernhard, Dr. jur., Dipl.-Phys.

(56) References cited:
- EP-A- 0 060 421
- CA-A- 1 138 817
- CH-A- 633 481
- GB-A- 1 384 556
- GB-A- 1 404 018
- US-A- 3 871 947

## Description

The present invention relates to web stock for display products such as labels, signs and the like, and more particularly to constructions and methods of making film facestocks for such display products. The Application is divided out of our co-pending European Application No. 86901268.2 (Publication No. 0210261).

It has long been known to manufacture and distribute pressure-sensitive adhesive stock for display products such as labels and signs by providing a layer of face material for the label or sign backed by a layer of pressure-sensitive adhesive which in turn is covered by a release liner. The liner protects the adhesive during shipment and storage. With specific reference to labels, the liner also allows for efficient handling and dispensing of individual labels which have been die-cut from the layer of face material while leaving the liner uncut.

Many label and sign applications require that the face material be a polymeric film material which can provide properties lacking in paper, such as weatherability (for outdoor signs), strength, water resistance, abrasion resistance, gloss and other properties. Because material costs in the manufacture of such film facestocks are relatively high, the desirability of reducing material costs without sacrifice of quality has long been apparent, but little or nothing has been accomplished toward this end.

The present invention opens the way to substantial cost savings in the manufacture of film facestocks while at the same time maintaining the desirable characteristics of the film facestocks which have been used prior to this invention. In a word, costs are greatly reduced at little or no sacrifice of quality, and even with a gain in quality in some instances.

In a first aspect, the present invention provides a multilayer facestock comprising cojoined layers. Such a facestock, known per se from GB-A-1 404 018, is characterized by a coextrudate of a relatively thick core layer of polymeric film material of a stiffness of from 10 to 100 Gurley and a relatively thin skin layer of polymeric film material on the face side of the coextrudate and having an ink-printable surface, and a pressure-sensitive adhesive layer combined at the side of said coextrudate opposite said face side. The invention also provides a label cut from the multilayer facestock.

In a second aspect, the present invention provides a method for manufacturing multilayer facestock comprising the steps of:
providing a first charge of a film-forming resin;
providing a second charge of a film-forming resin;
coextruding said first and second charges to form a multilayer co-extrudate comprising a relatively thick core layer and a relatively thin skin layer on one side of the coextrudate;
and combining said co-extrudate with a pressure-sensitive adhesive layer to form a facestock,
said resin of said first charge being selected to provide a core layer having a stiffness of from 10 to 100 Gurley, and
said resin of said second charge being selected to provide an ink-printable surface.

The facestock of the present invention may be combined on its adhesive side with a releasable liner, which advantageously may be of a multilayer web construction of the type which forms the subject of the parent Application No. 86901268.2 (Publication No. 0210261).

In a third aspect, the invention can be seen as directed to a method of manufacturing an all-plastic stock suitable for use by manufacturers of adhesive and printable products, comprising the steps of:
coextruding a liner comprising a plurality of layers of film-forming resin;
either simultaneously with said extrusion step or subsequently thereto combining release means at one face of said liner coextrudate;
either simultaneously with or subsequently to said extrusion step also coextruding facestock comprising a plurality of layers of film-forming resin by a method according to the second aspect of the present invention; and
either simultaneously with or subsequently to said first-mentioned coextrusion step temporarily joining said liner and said facestock by contacting the pressure-sensitive adhesive layer of said facestock with said release means combined with said liner.

The invention will now be described in more detail with reference to the accompanying drawings, in which:
FIG. 1 is a schematic, cross-sectional view of one embodiment of multilayer facestock in accordance with the invention;
FIG. 2 is a schematic, cross-sectional view of another embodiment of multilayer facestock in accordance with the invention;
FIG. 3 is a schematic cross-sectional view of yet another embodiment of multilayer facestock in accordance with the invention; and
FIG. 4 is a diagrammatic illustration of a method in accordance with the invention of manufacturing the facestock of FIG. 1.

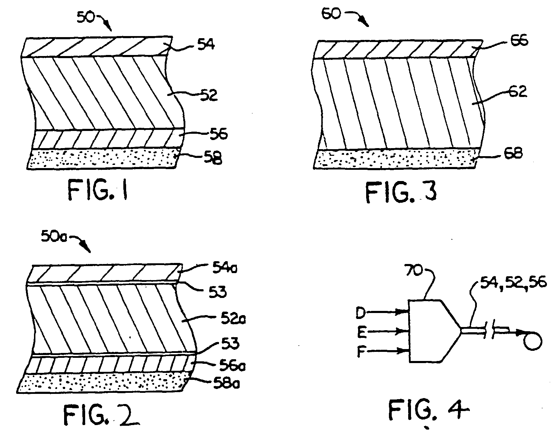

Typical examples of film facestocks illustrating the invention are shown in FIGS. 1 and 2. In FIG. 1, a multilayer web construction, generally indicated by the reference numeral 50, comprises a coextrudate including a core layer 52, a skin layer 54 on the face side of the coextrudate, and a skin layer 56 on the inner side of the coextrudate opposite the face side. Combined on the inner side of the coextrudate is a pressure-sensitive adhesive layer 58. In FIG. 2, a multilayer web construction, generally indicated by the numeral 50a, comprises layer 52a, 54a, 56a, and 58a generally corresponding to the layers 52, 54, 56 and 58 in FIG. 5. However, in FIG. 2, tie layers 53 join the core layer 52a to the skin layers 54a and 56a.

The coextrudates of FIGS. 1 and 2 comprise polymeric film materials, which are formed by simultaneous extrusion from a suitable known type of coextrusion die, and which are adhered to each other in a permanently combined state to provide a unitary coextrudate. The FIG. 1 construction is used when the materials of the core and skins are such that these layers firmly adhere or bond to each other when coextruded as adjacent film layers. The FIG. 2 construction, with the tie layers 53, is used when the core and skin materials do not sufficiently adhere or bond to each other when they are extruded together. Generally, the construction of FIG. 1 is presently used for roll film facestock and that of FIG. 2 for sheet film facestocks because, while polyethylene is presently preferred as the core material for both applications, roll film facestocks and sheet film facestocks generally use different skin materials, and the presently preferred material for the skin of the roll film facestock (ethylene vinyl acetate) is compatible with polyethylene in respect of inherent adhesion or bonding, while the presently preferred material for the skin of the sheet film facestock (polyvinyl chloride) is not. The term "roll film facestock" refers to facestock which is provided in roll form and typically is provided for the manufacture of labels. The term "sheet film facestock" refers to facestock which is provided cut into sheet form to be decoreted (by screen printing, for example) for use as decals, bumper stickers, thermal die-cut signs, and the like.

The materials of the layers of constructions 50 and 50a are selected according to the cost/benefit characteristics of candidate materials considering the functional or operational requirements of the layer in question.

Thus, the facestock aat its outside surface may require high weatherability and printability and good uniformity and control of surface texture, whether gloss or matte, whereas these qualities either are not necessary or are required in far lesser degree in the core of the facestocks. The latter, however must be such as to give the facestock opacity and the desired degree of stiffness, as well as sufficient body and strength, and represents generally the great bulk of the total material used in the construction. The stiffness of this core material should be from 10 to 100 Gurley. The inner surface of the film coextrudate must give good anchorage for the adhesive.

The presently preferred material for the core layers 54 or 54a in many facestock applications is polyethylene of low, medium or high density of between about 0.915 and 0.965 specific gravity. This is a relatively low cost, extrudable film-forming material whose stiffness (ranging through decreasing degrees of flexibility to semirigid) may be determined by the density selected, and whose body and strength are sufficient for most uses. Polyethylene of lower densities, down to a specific gravity of 0.890, may be employed for greater flexibility.

Another preferred material for the core layers 54 or 54a is polypropylene (or a propylene copolymer) having a flex modulus range of between about 8.96 x 10⁸ - 17.2 x 10⁸ Pa at 22.8°C (about 130,000 and 250,000 psi at 73°F), depending on the stiffness desired.

Ethylene vinyl acetate is generally the presently preferred material for both skin layers 54 and 56 in roll film applications, while polyvinyl chloride is generally the presently preferred material for both skin layers 54a and 56a in sheet film applications. A suitable resin for tie layer 53 in this instance is "CXA", marketed by DuPont. Another material for forming tie layers is "Plexar" marketed by Chemplex Co. Other specific materials are also available for performing the tying function in coextrusion operations. The outer surface of the skin layer 54 or 54a is corona-treated in a known manner to increase printability of the skin.

The preferred identity of the outer and inner skin layer material at present is partly a choice of convenience in practice, and it is contemplated that these materials often will not be identical in actual manufacture. For example, ethylene vinyl acetate might be the material of choice for the outer skin, but ethylene acrylic acid might be used on the inner skin for better anchorage to, say, an acrylic adhesive of choice.

Other materials for the skin layers include ethylene acrylic acid, ethylene methyl acrylic acid, ethylene ethyl acrylate, ethylene methyl acrylate, acrylonitrile butadiene styrene, nylon, polybutylene, polystyrene, polyurethane, polysulfone, polyvinylidene chloride, polypropylene, polycarbonate, polymethyl pentene, styrene maleic anhydride, styrene acrylonitrile, ionomers based on sodium or zinc salts of ethylene/methacrylic acid, acrylics, cellulosics, fluoroplastics, nitriles and thermoplastic polyesters.

While the foregoing examples of facestocks have employed skin layers on each side of the core, there are instances where a skin layer is employed only on the outer side of the construction, such as the construction 60 shown in FIG. 3, which employs the single skin layer 66 on the outer side of a core layer 62. In this instance, the pressure-sensitive adhesive layer 68 is directly adjacent the core layer. For example, such a construction could be used for the manufacture of high durability labels. Material presently preferred for the core layer in such instance is polyvinyl chloride or acrylonitrile butadiene styrene, and for the skin layer, polyvinylidene fluoride.

It will be understood from the foregoing that multilayer film facestocks have been provided having a relatively thick core layer of polymeric film material which contributes the majority of the stock's dimensional stability and stiffness, having a cojoined, relatively thin, ink-printable skin layer at least at the face side of the construction, and having a pressure-sensitive adhesive layer combined at the sides of the construction opposite the face side. From a method standpoint, this is accomplished by coextruding a plurality of at least two charges of film-forming resin to form a coextrudate having a relatively thick core layer and at least one relatively thin skin layer after preselecting the charge for the core layer, as by selection of density or flex modulus, to provide the degree of stiffness suitable for the label or sign application, and after preselecting the charge for the skin layer to provide a skin adapted to the intended decorating process, and combining the coextrudate with a pressure-sensitive adhesive layer.

Thus, in the manufacture of the facestock 50 seen in FIG. 1, charges D, E and F, corresponding respectively to layers 52, 54 and 56, may be prepared for coextrusion through a coextrusion die 70, as schematically illustrated in FIG. 4. Charge D for the core layer 52 is preselected to provide the suitable degree of stiffness, charge E is preselected to allow for good printability (usually following corona treatment of the formed film) and for weatherability if indicated, and charge F is preselected for good adhesive anchorage. As previously indicated, often charges E and F for the skin layers may be the same, and in some applications, the skin layer on the inner or adhesive side, corresponding to charge F, is eliminated. The coextrudates 54, 52, 56 forming the facestock may be hot-stretched.

The coextrudate may be directly coated with the adhesive 58, or the adhesive 58 may be transferred from a liner with which the facestock is combined. In particular, the coextrudate of cojoined facestock layers 54, 52, 56 may be substituted for the facestock 32 of FIGS. 3B to 3D of the parent Application No. 86901268.2 (Publication No. 0210261), and the adhesive 58 may be the adhesive applied at the coating station S in said FIG. 3A. The result is an all-plastic facestock/liner combination in which both the facestock and liner are multilayered.

Instead of being coated or combined on the formed coextrudate as just described, the adhesive 58 may be coextruded along with the film-forming layers 54, 52, 56. The invention also contemplates simultaneously extruding both liner and facestock as by simultaneously extruding all the charges A through F, together with a charge of adhesive 58, which would for example be extruded through an additional orifice adjacent to the orifice for charge F. This would require provision of release means for the liner prior to contact of the liner by the adhesive.

The facestock construction 50a is manufactured in a manner similar to the manufacture of facestock 50. The additional tie layers 53 are coextruded along with the layers 52a, 54a and 56a.

## Claims

1. A multilayer facestock comprising cojoined layers, characterized by a coextrudate of a relatively thick core layer (52, 52a, 62) of polymeric film material of a stiffness of from 10 to 100 Gurley and a relatively thin skin layer (54, 54a, 66) of polymeric film material on the face side of the coextrudate and having an ink-printable surface and a pressure sensitive adhesive layer (58, 58a, 68) combined at the side of said coextrudate opposite said face side.

2. A facestock according to claim 1, wherein said coextrudate comprises a second relatively thin skin layer (56, 56a) of polymeric film material between the core layer (52, 52a) and the adhesive layer (58, 58a).

3. A facestock according to one of the preceding claims, wherein the polymeric material of said core layer (52, 52a) is polyethylene, especially a polyethylene of a specific gravity of from 0.890 to 0.965, or a polypropylene polymer or copolymer with a flex modulus range of from 8.96 x 10⁸ - 17.2 x 10⁸ Pa at 22.8°C (130,000 to 250,000 psi at 73 °F).

4. A facestock according to any preceding claim, wherein said core layer (52, 52a) renders said facestock opaque.

5. A facestock according to any preceding claim, wherein the or each skin layer (54, 56; 54a, 56a) comprises ethylene-vinyl acetate, ethylene acrylic acid, ethylene methyl acrylic acid, ethylene ethyl acrylate, ethylene methyl acrylate, acrylonitrile butadiene styrene, nylon, polybutylene, polystyrene, polyurethane, polysulfone, polyvinyl chloride, polyvinylidene chloride, polypropylene, polycarbonate, polymethyl pentene, styrene maleic anhydride or styrene acrylonitrile.

6. A facestock according to claim 5, wherein the or each said skin layer (54, 56; 54a, 56a) comprises ethylene-vinyl acetate or polyvinyl chloride having a corona-treated outer surface.

7. A facestock according to any preceding claim, wherein the coextrudate comprises a single skin layer (66).

8. A facestock according to claim 7, wherein said skin layer (66) is polyvinylidene fluoride and said core layer (62) is polyvinylchloride or acrylonitrile-butadiene-styrene.

9. A facestock according to any preceding claim, wherein said coextrudate includes a tie layer (53) between said core layer (52a) and the or said skin layer (54a, 56a).

10. A facestock according to any preceding claim, wherein said adhesive layer (58, 58a, 68) is combined by being coated thereon, transferred from a liner with which the facestock is combined, or by being coextruded therewith.

11. A facestock according to any preceding claim, wherein its coextrudate of cojoined layers is hot-stretched.

12. A facestock according to any preceding claim, combined on its adhesive side (i.e. on the side exhibiting the pressure sensitive adhesive layer) with a releasable liner.

13. A label cut from a multilayer facestock as defined in any preceding claim.

14. A method for manufacturing multilayer facestock comprising the steps of:
providing a first charge of a film-forming resin;
providing a second charge of a film-forming resin;
coextruding said first and second charges to form a multilayer coextrudate comprising a relatively thick core layer (52, 52a, 56a) and a relatively thin skin layer (54, 54a, 66) on one side of the coextrudate;
and combining said coextrudate with a pressure-sensitive adhesive layer (58, 58a, 68) to form a facestock (50, 50a, 60)
said resin of said first charge being selected to provide a core layer having a stiffness of from 10 to 100 Gurley, and
said resin of said second charge being selected to provide an ink printable surface.

15. A method according to claim 14, comprising the additional steps of:
providing a third charge of a film-forming resin, and
coextruding said third charge with said first and second charges whereby the extrudate comprises a second relatively thin skin layer (56, 56a) on the opposite side of the core layer (52, 52a).

16. A method according to claim 14 or 15, wherein said first charge is polyethylene, especially polyethylene of a specific gravity of from 0.890 to 0.965 or a polypropylene polymer or copolymer with a flex modulus range of from 8.96 x 10⁸ - 17.2 x 10⁸ Pa at 22.8°C (130,000 to 250,000 psi at 73 °F).

17. A method according to one of claims 14 to 16, wherein said core layer (52, 52a) renders said facestock opaque.

18. A method according to any one of claims 14 to 17, wherein the second charge and/or third charge if used comprises ethylene-vinyl acetate, ethylene acrylic acid, ethylene methyl acrylic acid, ethylene ethyl acrylate, ethylene methyl acrylate, acrylonitrile butadiene styrene, nylon, polybutylene, polystyrene, polyurethane, polysulfone, polyvinyl chloride, polyvinylidene chloride, polypropylene, polycarbonate, polymethyl pentene, styrene maleic anhydride or styrene acrylonitrile.

19. A method according to claim 18, wherein the second charge and/or third charge if used comprises ethylene-vinyl acetate or polyvinyl chloride having a corona-treated outer surface.

20. A method according to claim 14, wherein the first charge is polyvinyl chloride or acrylonitrile-butadiene-styrene and the second charge is polyvinylidene fluoride.

21. A method according to any one of claims 14 to 20, wherein said pressure-sensitive adhesive layer is combined with said extrudate by transfer coating or by direct application following said step of coextruding.

22. A method according to any one of claims 14 to 20, wherein said pressure-sensitive adhesive layer is combined with said extrudate by coextruding said adhesive layer simultaneously with the other layers.

23. A method according to any one of claims 14 to 22, including the additional step of coextruding a tie layer (53) between said core layer and the or each said skin layers.

24. A method according to any one of claims 14 to 23, comprising the additional step of corona-treating the outer surface of the skin layer, or of the skin layer opposite said adhesive layer if there are two said skin layer, to increase the printability of said surface.

25. A method according to any one of claims 14 to 24, comprising the additional step of combining the face stock with a liner.

26. A method according to any one of claims 14 to 25 comprising the additional step of hot-stretching said coextrudate.

27. A method of manufacturing an all-plastic stock suitable for use by manufacturers of adhesive and printable products, comprising the steps of:
coextruding a liner comprising a plurality of layers of film-forming resin;
either simultaneously with said extrusion step or subsequently thereto combining release means at one face of said liner coextrudate;
either simultaneously with or subsequently to said extrusion step also coextruding facestock comprising a plurality of layers of film-forming resin by a method according to any one of claims 14 to 25; and
either simultaneously with or subsequently to said first-mentioned coextrusion step temporarily joining said liner and said facestock by contacting the pressure-sensitive adhesive layer of said facestock with said release means combined with said liner.

## Patentansprüche

1. Mehrlagiges Flächenmaterial, das miteinander verbundene Schichten umfaßt, **gekennzeichnet durch** ein Koextrudat aus einer relativ dicken Kernschicht (52, 52a, 62) aus einem Polymerfilm-Material mit einer Steifheit von 10 bis 100 Gurley und einer relativ dünnen Oberflächenschicht (54, 54a, 66) aus Polymerfilm-Material auf der Oberseite des Koextrudats und eine mit Druckfarbe bedruckbare Oberfläche und eine Schicht (58, 58a, 68) aus druckempfindlichem Klebstoff, die auf der der Oberseite abgewandten Seite des Koextrudats angeordnet ist.

2. Flächenmaterial nach Anspruch 1, wobei das Koextrudat eine zweite relativ dünne Oberflächenschicht (56, 56a) aus Polymerfilm-Material zwischen der Kernschicht (52, 52a) und der Klebstoffschicht (58, 58a) umfaßt.

3. Flächenmaterial nach einem der vorhergehenden Ansprüche, wobei das Polymermaterial der Kernschicht (52, 52a) aus Polyethylen, insbesondere aus Polyethylen mit einer Wichte von 0,890 bis 0,965 oder aus einem Polypropylenpolymer oder -copolymer mit einem Biegemodul von 8,96 x 10⁸ bis 17,2 x 10⁸ Pa bei 22,8°C (130.000 bis 250.000 psi bei 73°F) besteht.

4. Flächenmaterial nach einem der vorhergehenden Ansprüche, wobei die Kernschicht (52, 52a) das Flächenmaterial undurchsichtig macht.

5. Flächenmaterial nach einem der vorhergehenden Ansprüche, wobei die bzw. jede Oberflächenschicht (54, 56; 54a, 56a) Ethylen-Vinylacetat, Ethylen-Acrylsäure, Ethylen-Methacrylsäure, Ethylen-Ethylacrylat, Ethylen-Methylacrylat, Acrylnitril-Butadien-Styrol, Nylon, Polybutylen, Polystyrol, Polyurethan, Polysulfon, Polyvinylchlorid, Polyvinylidenchlorid, Polypropylen, Polycarbonat, Polymethylpenten, Styrol-Maleinanhydrid und Styrol-Acrylnitril enthält.

6. Flächenmaterial nach Anspruch 5, wobei die bzw. jede Oberflächenschicht (54, 56; 54a 56a) Ethylen-Vinylacetat oder Polyvinylchlorid mit einer Coronar-Entladungs-behandelten Außenfläche enthält.

7. Flächenmaterial nach einem der vorhergehenden Ansprüche, wobei das Koextrudat eine einzelne Oberflächenschicht (66) enthält.

8. Flächenmaterial nach Anspruch 7, wobei die Oberflächenschicht (66) aus Polyvinylidenfluorid und die Kernschicht (62) aus Polyvinylchlorid oder Acrylnitril-Butadien-Styrol besteht.

9. Flächenmaterial nach einem der vorhergehenden Ansprüche, wobei das Koextrudat eine Bindeschicht (53) zwischen der Kernschicht (52a) und der Oberflächenschicht (54a, 56a) enthält.

10. Flächenmaterial nach einem der vorhergehenden Ansprüche, wobei die Klebstoffschicht (58, 58a, 68) durch Beschichtung mit dem Flächenmaterial verbunden wird, von einem Liner, mit dem das Flächenmaterial verbunden ist, übertragen wird oder mit dem Flächenmaterial koextrudiert wird.

11. Flächenmaterial nach einem der vorhergehenden Ansprüche, wobei das Koextrudat aus verbundenen Lagen heißverstreckt ist.

12. Flächenmaterial nach einem der vorhergehenden Ansprüche, wobei auf der Klebstoffseite, d.h. auf der die Schicht aus druckempfindlichem Klebstoff aufweisenden Seite, ein abziehbarer Liner angebracht ist.

13. Etikett, das aus einem mehrlagigen Flächenmaterial nach einem der vorhergehenden Ansprüche gestanzt ist.

14. Verfahren zur Herstellung eines mehrlagigen Flächenmaterials, das folgende Schritte umfaßt:
Bereitstellen einer ersten Menge eines filmformenden Harzes;
Bereitstellen einer zweiten Menge eines filmformenden Harzes;
Koextrudieren der ersten und zweiten Menge, um ein mehrlagiges Koextrudat mit einer relativ dicken Kernschicht (52, 52a, 56a) und einer relativ dünnen Oberflächenschicht (54, 54a, 66) auf einer Seite des Koextrudats zu formen; und
Kombinieren des Koextrudats mit einer Schicht (58, 58a, 68) aus druckempfindlichem Klebstoff, um ein Flächenmaterial (50, 50a, 60) zu formen, wobei
das Harz der ersten Menge derart ausgewählt wird, daß die Kernschicht eine Steifheit von 10 bis 100 Gurley aufweist, und wobei
das Harz der zweiten Menge derart ausgewählt wird, daß eine mit Druckfarbe bedruckbare Oberfläche entsteht.

15. Verfahren nach Anspruch 14, das folgende weitere Schritte umfaßt:
Bereitstellen einer dritten Menge eines filmformenden Harzes; und
Extrudieren der dritten Menge mit der ersten und zweiten Menge, wobei das Extrudat eine zweite, relativ dünne Oberflächenschicht (56, 56a) auf der anderen Seite der Kernschicht (52, 52a) aufweist.

16. Verfahren nach Anspruch 14 oder 15, wobei die erste Menge aus Polyethylen, insbesondere aus Polyethylen mit einer Wichte von 0,890 bis 0,965 oder aus einem Polypropylenpolymer oder -copolymer mit einem Biegemodul von 8,96 x 10⁸ bis 17,2 x 10⁸ Pa bei 22,8°C (130.000 bis 250.000 psi bei 73°F), besteht.

17. Verfahren nach einem der vorhergehenden Ansprüche, wobei die Kernschicht (52, 52a) das Flächenmaterial undurchsichtig macht.

18. Verfahren nach einem der Ansprüche 14 bis 17, wobei die zweite Menge und/oder die dritte Menge, falls verwendet, Ethylen-Vinylacetat, Ethylen-Acrylsäure, Ethylen-Methacrylsäure, Ethylen-Ethylacrylat, Ethylen-Methylacrylat, Acrylnitril-Butadien-Styrol, Nylon, Polybutylen, Polystyrol, Polyurethan, Polysulfon, Polyvinylchlorid, Polyvinylidenchlorid, Polypropylen, Polycarbonat, Polymethylpenten, Styrol-Maleinanhydrid und Styrol-Acrylnitril enthält.

19. Verfahren nach Anspruch 18, wobei die zweite Menge und/oder die dritte Menge, falls verwendet, Ethylen-Vinylacetat oder Polyvinylchlorid mit einer Coronar-Entladungs-behandelten Außenfläche enthält.

20. Verfahren nach Anspruch 14, wobei die erste Menge aus Polyvinylchlorid oder Acrylnitril-Butadien-Styrol und die zweite Menge aus Polyvinylidenfluorid besteht.

21. Verfahren nach einem der Ansprüche 14 bis 20, wobei die Schicht aus druckempfindlichem Klebstoff mit dem Extrudat durch Übertragungsbeschichtung oder durch direkte Aufbringung nach dem Koextrusionsschritt verbunden wird.

22. Verfahren nach einem der Ansprüche 14 bis 20, wobei die Schicht aus druckempfindlichem Klebstoff mit dem Extrudat durch gleichzeitige Coextrusion der Klebstoffschicht mit den anderen Schichten verbunden wird.

23. Verfahren nach einem der Ansprüche 14 bis 22, das den zusätzlichen Schritt der Koextrusion einer Verbindungsschicht (53) zwischen der Kernschicht und der oder jeder der Oberflächenschicht/en enthält.

24. Verfahren nach einem der Ansprüche 14 bis 23, das den zusätzlichen Schritt der Behandlung der Außenfläche der Oberflächenschicht bzw. der der Klebstoffschicht gegenüberliegenden Oberflächenschicht, wenn es zwei Oberflächenschichten gibt, mit einer Coronar-Entladung enthält, um die Bedruckbarkeit der Oberfläche zu steigern.

25. Verfahren nach einem der Ansprüche 14 bis 24, das den zusätzlichen Schritt der Kombination des Flächenmaterials mit einem Liner (10) enthält.

26. Verfahren nach einem der Ansprüche 14 bis 25, das den weiteren Schritt des Heißverstreckens des Koextrudats enthält.

27. Verfahren zur Herstellung eines ausschließlich aus Kunststoff bestehenden Grundmaterials, das zur Verwendung durch Hersteller von klebenden und bedruckbaren Produkten verwendbar ist und das die folgenden Schritte umfaßt:
Koextrudieren eines Liners, der eine Mehrzahl von Schichten aus filmformenden Harzen beinhaltet;
Verbinden von Abziehmitteln an einer Oberfläche des Liner-Koextrudats entweder gleichzeitig mit oder nach dem Extrusionsschritt;
Koextrudieren des Flächenmaterials, das eine Mehrzahl von Schichten aus filmformendem Harz enthält, durch ein Verfahren nach einem der Ansprüche 14 bis 25, entweder gleichzeitig mit oder nach dem Extrusionsschritt; und
zeitweises Verbinden des Liners und des Flächenmaterials durch Kontaktierung der Schicht aus druckempfindlichem Klebstoff des Flächenmaterials mit den Abziehmitteln, die mit dem Liner verbunden sind, entweder gleichzeitig mit oder nach dem erstgenannten Koextrusionsschritt.

## Revendications

1. Une doublure multicouche comprenant des couches co-réunies, caractérisée par un co-extrudat d'une couche à âme relativement épaisse (52, 52a, 62) de matériau en film polymère d'une rigidité de 10 à 100 Gurley et une couche superficielle relativement mince (54, 54a, 66) de matériau en film polymère sur le côté de face du co-extrudat et ayant une surface apte à être imprimée par une encre et une couche d'adhésif sensible à la pression (58, 58a, 68) combinée sur le côté dudit co-extrudat opposé audit côté de face.

2. Une doublure selon la revendication 1, dans laquelle ledit co-extrudat comprend une deuxième couche superficielle relativement mince (56, 56a) de matériau en film polymère entre la couche d'âme (52, 52a) et la couche d'adhésif (58, 58a).

3. Une doublure selon l'une des revendications précédentes, dans laquelle le matériau polymère de ladite couche d'âme (52, 52a) est du polyéthylène, notamment du polyéthylène d'une densité de 0,890 à 0,965 ou un polymère ou un copolymère de polypropylène ayant un module de flexion compris dans la gamme de 8,96 x 10⁸ - 17,2 x 10⁸ Pa à 22,8°C (130 000 à 250 000 psi à 73°F).

4. Une doublure selon l'une des revendications précédentes, dans laquelle ladite couche d'âme (52, 52a) rend opaque ladite doublure.

5. Une doublure selon l'une des revendications précédentes, dans laquelle la ou chaque couche superficielle (54, 56; 54a, 56a) comprend de l'acétate de vinyle-éthylène, de l'acide acrylique-éthylène, du méthyl-acide acrylique-éthylène, de l'acrylate d'éthyle-éthylène, de l'acrylate de méthyle-éthylène, de l'acrylonitrile-butadiène-styrène, du nylon, du polybutylène, du polystyrène, du polyuréthane, de la polysulfone, du chlorure de polyvinyle, du chlorure de polyvinylidène, du polypropylène, du polycarbonate, du polyméthyl-pentène, du styrène-anhydride maléique et du styrène-acrylonitrile.

6. Une doublure selon la revendication 5, dans laquelle la ou chaque couche superficielle (54, 56; 54a, 56a) comprend de l'acétate de vinyle-éthylène ou du chlorure de polyvinyle ayant une surface extérieure traitée par effet corona.

7. Une doublure selon l'une des revendications précédentes, dans laquelle le co-extrudat comprend une seule couche superficielle (66).

8. Une doublure selon la revendication 7, dans laquelle ladite couche superficielle (66) est du fluorure de polyvinylidène et ladite couche d'âme (62) est du chlorure de polyvinyle ou de l'acrylonitrile-butadiène-styrène.

9. Une doublure selon l'une des revendications précédentes, dans laquelle ledit co-extrudat comprend une couche d'attache (53) entre ladite couche d'âme (52a) et la ou ladite couche superficielle (54a,56a).

10. Une doublure selon l'une des revendications précédentes, dans laquelle ladite couche d'adhésif (58, 58a, 68) est combinée en étant revêtue sur celle-ci, transférée à partir d'une garniture avec laquelle la doublure est combinée ou en étant co-extrudée avec celle-ci.

11. Une doublure selon l'une des revendications précédentes, dans laquelle le co-extrudat de couches co-réunies est étiré à chaud.

12. Une doublure selon l'une des revendications précédentes combinée sur son côté adhésif, (c'est-à-dire sur le côté présentant la couche d'adhésif sensible à la pression) avec une garniture apte à être détachée.

13. Une étiquette découpée à partir d'une doublure multicouche comme défini dans l'une des revendications précédentes.

14. Un procédé pour la fabrication d'une doublure multicouche comprenant les étapes consistant à:
prévoir une première charge d'une résine filmogène;
prévoir une deuxième charge d'une résine filmogène;
co-extruder lesdites première et deuxième charges pour former un co-extrudat multicouche comprenant une couche d'âme relativement épaisse (52, 52a, 56a) et une couche superficielle relativement mince (54, 54a, 66) sur un côté du co-extrudat;
et combiner ledit co-extrudat avec une couche d'adhésif sensible à la pression (58, 58a, 68) pour former une doublure (50, 50a, 60)
ladite résine de ladite première charge étant choisie pour fournir une couche d'âme ayant une rigidité de 10 à 100 Gurley, et
ladite résine de ladite deuxième charge étant choisie pour fournir une surface apte à être imprimée par une encre.

15. Un procédé selon la revendication 14, comprenant les étapes supplémentaires consistant à:
prévoir une troisième charge d'une résine filmogène, et
co-extruder ladite troisième charge avec lesdites première et deuxième charges si bien que l'extrudat comprend une deuxième couche superficielle relativement mince (56, 56a) sur le côté opposé de la couche d'âme (52, 52a).

16. Un procédé selon la revendication 14 ou 15, dans lequel ladite première charge est du polyéthylène, notamment du polyéthylène d'une densité de 0,890 à 0,965 ou un polymère ou copolymère de polypropylène ayant un module de flexion compris dans la gamme de 8,96 x 10⁸ - 17,2 x 10⁸ Pa à 22,8°C (130 000 à 250 000 psi à 73°C).

17. Un procédé selon l'une des revendications précédentes, dans lequel ladite couche d'âme (52, 52a) rend opaque ladite doublure.

18. Un procédé selon les revendications 14 à 18, dans lequel la deuxième charge et/ou la troisième charge si elle est utilisée comprend de l'acétate de vinyle-éthylène, de l'acide acrylique-éthylène, du méthyl-acide acrylique-éthylène, de l'acrylate d'éthyle-éthylène, de l'acrylate de méthyle-éthylène, de l'acrylonitrile-butadiène-styrène, du nylon, du polybutylène, du polystyrène, du polyuréthane, de la polysulfone, du chlorure de polyvinyle, du chlorure de polyvinylidène, du polypropylène, du polycarbonate, du polyméthyl-pentène, du styrène-anhydre maléique et du styrène-acrylonitrile.

19. Un procédé selon la revendication 18, dans lequel la deuxième charge et/ou la troisième charge, si elle est utilisée comprend de l'acétate de vinyle-éthylène ou du chlorure de polyvinyle ayant une surface extérieure traitée par effet corona.

20. Un procédé selon la revendication 14, dans lequel la première charge est du chlorure de polyvinyle ou de l'acrylonitrile-butadiène-styrène et la deuxième charge est du fluorure de polyvinylidène.

21. Un procédé selon l'une quelconque des revendications 14 à 20, dans lequel ladite couche d'adhésif sensible à la pression est combinée avec ledit extrudat par revêtement par transfert ou par application directe suivant ladite étape de co-extrusion.

22. Un procédé selon l'une quelconque des revendications 14 à 20, dans lequel ladite couche d'adhésif sensible à la pression est combinée avec ledit extrudat en co-extrudant ladite couche d'adhésif simultanément avec les autres couches.

23. Un procédé selon l'une quelconque des revendications 14 à 22, comprenant l'étape supplémentaire de co-extrusion d'une couche d'attache (53) entre ladite couche d'âme et la ou chacune desdites couches superficielles.

24. Un procédé selon l'une quelconque des revendications 14 à 23, comprenant l'étape supplémentaire de traitement par effet corona de la surface extérieure de la couche superficielle ou de la couche superficielle opposée à ladite couche d'adhésif s'il y a deux desdites couches superficielles pour augmenter l'aptitude à l'impression de ladite surface.

25. Un procédé selon l'une quelconque des revendications 14 à 24, comprenant l'étape supplémentaire consistant à combiner la doublure avec une garniture.

26. Un procédé selon l'une quelconque des revendications 14 à 25, comprenant l'étape supplémentaire d'étirage à chaud dudit co-extrudat.

27. Un procédé de fabrication d'une réserve tout en matière plastique appropriée pour être utilisée par des fabricants d'adhésif et de produits aptes à être imprimés comprenant les étapes consistant à:
co-extruder une garniture comprenant une pluralité de couches de résine filmogène;
soit simultanément avec ladite étape d'extrusion, soit subséquemment à celle-ci en combinant un moyen de détachement sur une face dudit co-extrudat de garniture;
soit simultanément avec soit subséquemment à ladite étape d'extrusion en co-extrudant également la doublure comprenant une pluralité de couches de résine filmogène par un procédé selon l'une quelconque des revendications 14 à 25; et
soit simultanément avec, soit subséquemment à ladite première étape de co-extrusion mentionnée en reliant temporairement ladite garniture et ladite doublure en mettant en contact la couche d'adhésif sensible à la pression de ladite doublure avec ledit moyen de détachement combiné avec ladite doublure.
